# EUROPEAN PATENT SPECIFICATION

(11) **EP 4 663 420 B1**
(45) Date of publication and mention of the grant of the patent: **02.09.2026**
(21) Application number: 25180488.6
(22) Date of filing: 03.06.2025
(51) Int. Cl.: B41J 11/00, G06F 3/12

(54) **IMAGE FORMATION CONTROL METHOD AND IMAGE FORMING APPARATUS**
BILDERZEUGUNGSSTEUERUNGSVERFAHREN UND BILDERZEUGUNGSVORRICHTUNG
PROCÉDÉ DE COMMANDE DE FORMATION D'IMAGE ET APPAREIL DE FORMATION D'IMAGE

(30) Priority: 10.06.2024 JP 2024093547
(43) Date of publication of application: 17.12.2025
(73) Proprietor: KYOCERA Document Solutions Inc., Osaka-shi, Osaka 540-8585 (JP)
(72) Inventor: Toda, Goshi, Osaka-shi, 540-8585 (JP)
(74) Representative: Plougmann Vingtoft a/s

(56) References cited:
- JP-A- 2024 017 243
- US-A1- 2010 196 042
- US-A1- 2018 281 487
- US-A1- 2021 031 510

## Description

### BACKGROUND

The present disclosure relates to an image formation control method for controlling an image forming apparatus including a heater for drying ink on a sheet with an ink image formed thereon, and the image forming apparatus.

An image forming apparatus that forms an image on a sheet using an inkjet method may include a drying device that dries ink on the sheet by means of a heater.

The power supplied to the heater is adjusted by feedback control based on a target temperature and a detection value of a temperature detection device that detects the temperature of the heater or the air heated by the heater.

It is also known that the temperature of the heater or the conveyance of the sheet in a region corresponding to the drying device is controlled in accordance with the amount of ink per unit area on the sheet.

Document JP 2024 017243 A discloses relevant prior art for the present invention.

### SUMMARY

An image formation control method according to the invention is a method for controlling an image forming apparatus including a printing device and a drying device. The printing device forms an image on a sheet by ejecting ink. The drying device includes a temperature detection device and a heater, and dries the ink on the sheet by means of the heater. The power supplied to the heater is adjusted by feedback control based on a target temperature set for each job for sequentially forming images on a plurality of sheets and a temperature detected by the temperature detection device. The image formation control method includes, by a control device, setting the target temperature corresponding to the job and causing the printing device to execute the job when a request for the job is input while the printing device is not operating. The image formation control method further includes, by the control device, executing first insertion control of, when an insertion event occurs in which a predetermined insertion condition is satisfied while the printing device is executing the job, causing the printing device to interrupt a target job which is the job being executed, causing the printing device to execute a test print process of forming a predetermined image on one or more of the sheets without changing the target temperature, and then causing the printing device to execute a remaining process of the target job. The image formation control method further includes, by the control device, executing interrupt control of, when an interrupt event occurs in which a request for an interrupt job which is a new job is input while the target job is being executed, causing the printing device to interrupt the target job, changing the target temperature to a temperature corresponding to the interrupt job, and causing the printing device to execute the interrupt job, and then returning the target temperature to the temperature corresponding to the target job, and causing the printing device to execute the remaining process of the target job.

An image forming apparatus according the invention includs the printing device, the drying device, and a control device configured to realize the image formation control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a configuration diagram of an image forming apparatus according to an embodiment.
FIG. 2 is a block diagram showing a configuration of a control device in the image forming apparatus according to the embodiment.
FIG. 3 is a flowchart showing an example of the procedure of image formation control in the image forming apparatus according to the embodiment.
FIG. 4 is a flowchart showing the procedure of a first example of insertion print control in the image forming apparatus according to the embodiment.
FIG. 5 is a flowchart showing the procedure of a second example of the insertion print control in the image forming apparatus according to the embodiment.
FIG. 6 is a flowchart showing the procedure of a third example of the insertion print control in the image forming apparatus according to the embodiment.
FIG. 7 is a flowchart showing the procedure of a first example of interrupt job control in the image forming apparatus according to the embodiment.
FIG. 8 is a flowchart showing the procedure of a second example of the interrupt job control in the image forming apparatus according to the embodiment.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

### [Configuration of Image Forming Apparatus 10]

An image forming apparatus 10 according to the embodiment includes a plurality of sheet storing portions 1 and a printing device 4. The printing device 4 includes an image forming portion 40 and a sheet conveying device 3.

The sheet conveying device 3 includes a sheet feeding mechanism 30, a plurality of conveying roller pairs 31, a first belt conveyor device 32, a second belt conveyor device 33, and a discharge roller pair 34. The sheet feeding mechanism 30 feeds a sheet 9 in a target storing portion selected from the plurality of sheet storing portions 1 to a main conveying path 301.

The plurality of conveying roller pairs 31 convey the sheet 9 along the main conveying path 301, and further send the sheet 9 to the first belt conveyor device 32.

The first belt conveyor device 32 takes over from the plurality of conveying roller pairs 31 to convey the sheet 9, and sends the sheet 9 to the second belt conveyor device 33. The second belt conveyor device 33 takes over from the first belt conveyor device 32 to convey the sheet 9, and further sends the sheet 9 to a rear conveying path 302.

The first belt conveyor device 32 includes an annular conveying belt 320, a plurality of support rollers 321, and a suction device 322.

The plurality of support rollers 321 rotatably support the conveying belt 320. A motor (not shown) rotates one of the plurality of support rollers 321 to rotate the conveying belt 320.

The rotating conveying belt 320 conveys the sheet 9. The suction device 322 adheres the sheet 9 to the upper surface of the conveying belt 320 by suctioning air.

The second belt conveyor device 33 includes an annular conveying belt 330 and a plurality of support rollers 331.

The plurality of support rollers 331 rotatably support the conveying belt 330. A motor (not shown) rotates one of the plurality of support rollers 331 to rotate the conveying belt 330. The rotating conveying belt 330 conveys the sheet 9.

The image forming portion 40 forms an image on the sheet 9 conveyed by the first belt conveyor device 32. That is, the printing device 4 executes a print process of forming an image on the sheet 9 while conveying the sheet 9.

In the present embodiment, the image forming portion 40 forms an image on the sheet 9 by ejecting ink onto the sheet 9. That is, the printing device 4 executes the print process using an inkjet method. The ink is an example of the developer.

The image forming portion 40 includes a plurality of ink heads 41 and a plurality of ink supply portions 42 corresponding to inks of different colors. Specifically, the image forming portion 40 includes four ink heads 41 and four ink supply portions 42 corresponding to yellow, magenta, cyan, and black.

Each of the plurality of ink heads 41 includes a plurality of jet nozzles 41a that eject ink. The plurality of ink heads 41 are fixed at positions facing the conveying belt 320 of the first belt conveyor device 32. The plurality of ink supply portions 42 store inks of different colors and supply the inks to the plurality of ink heads 41, respectively.

The first belt conveyor device 32 conveys the sheet 9 on which an image has been formed to the second belt conveyor device 33.

The image forming apparatus 10 further includes a drying device 5 disposed to face the upper surface of the conveying belt 330 of the second belt conveyor device 33. The drying device 5 has a heater 51 that heats the ink on the sheet 9 to dry the ink.

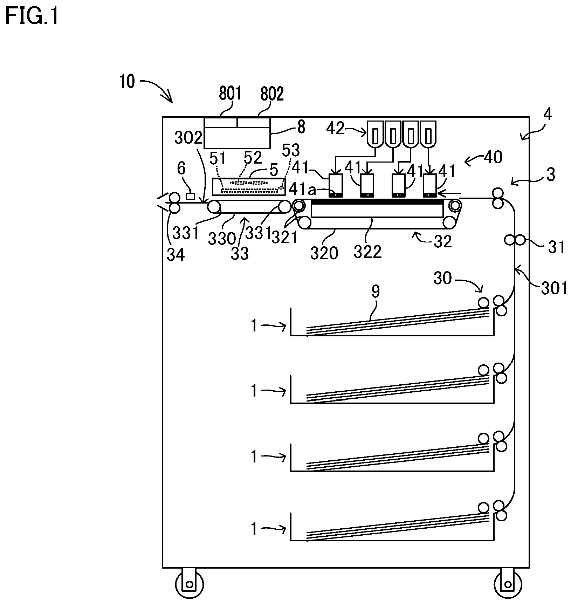

In the example shown in FIG. 1, the drying device 5 further includes a fan 52. The fan 52 sends air heated by the heater 51 to the sheet 9 on the second belt conveyor device 33.

Further, the drying device 5 includes a temperature sensor 53 that detects the temperature in the drying device 5. The temperature sensor 53 detects the temperature of the heater 51 or the temperature of the air heated by the heater 51.

For example, the temperature sensor 53 is a thermistor. The temperature sensor 53 is an example of the temperature detection device that detects the temperature in the drying device 5.

The image forming apparatus 10 further includes an operation device 801, a display device 802, and a control device 8 (see FIG. 1).

The operation device 801 detects a human operation. For example, the operation device 801 includes a plurality of operation buttons and a touch panel. The display device 802 can display various types of information. For example, the display device 802 is a panel display device such as a liquid crystal display panel.

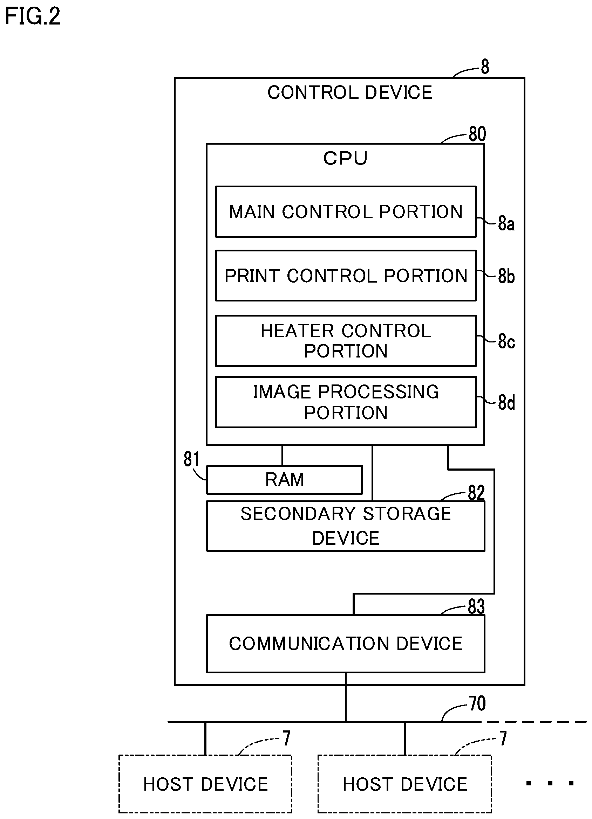

As shown in FIG. 2, the control device 8 includes a central processing unit (CPU) 80, a random access memory (RAM) 81, a secondary storage device 82, a communication device 83, and the like.

The CPU 80 executes various types of control and data processing by executing computer programs. The RAM 81 temporarily stores the computer programs executed by the CPU 80 and various types of data.

The secondary storage device 82 is a computer-readable nonvolatile storage device. The secondary storage device 82 stores the computer programs executed by the CPU 80 and various types of data. For example, one or both of a flash memory and a hard disk drive are employed as the secondary storage device 82.

The communication device 83 executes communication with another device, such as a host device 7, through a network 70. The CPU 80 executes communication with another device through the communication device 83. The host device 7 is an information processing device that requests the image forming apparatus 10 to perform the print process.

The CPU 80 includes a plurality of processing modules implemented by executing the computer programs. The plurality of processing modules include a main control portion 8a, a print control portion 8b, a heater control portion 8c, and the like (see FIG. 2).

The main control portion 8a executes start control and the like for starting various processes in response to operations to the operation device 801 or processing requests received through the communication device 83.

The print control portion 8b controls the printing device 4. The print control portion 8b controls the conveyance of the sheet 9 by controlling the sheet conveying device 3.

Further, the print control portion 8b causes the image forming portion 40 to execute the ink ejection process and operates the fan 52 of the drying device 5, in synchronization with the conveyance of the sheet 9.

For example, the print control portion 8b causes the printing device 4 to execute a job of sequentially forming images on a plurality of sheets 9. Further, the print control portion 8b sets a target temperature of the drying device 5 in accordance with the content of the print process.

When the print process is executed, the heater control portion 8c controls a power supply circuit (not shown) to control the amount of power supplied to the heater 51 of the drying device 5. The power supply circuit is a circuit that supplies power to the heater 51. The heater control portion 8c adjusts the power supplied to the heater 51 by feedback control based on the target temperature and the temperature detected by the temperature sensor 53.

By the way, when the image forming apparatus 10 executes the job, the target temperature of the drying device 5 may be set for each job. For example, the target temperature is set based on the type, etc. of the sheet 9 used in the job.

On the other hand, while the job is being executed, an event may occur that serves as the starting point for a test print process of forming a predetermined image or an interrupt job. In this case, the job being executed is interrupted, and the test print process or the interrupt job corresponding to the event is executed. The interrupt job is a new job that is different from the job being executed.

When the target temperature corresponding to the job being executed is different from the target temperature corresponding to the test print process or the interrupt job, a waiting time occurs before and after the test print process or the interrupt job.

The waiting time is a time required for the temperature detected by the temperature sensor 53 to fall within an allowable range based on the target temperature. The longer the waiting time, the larger the difference between the target temperature corresponding to the job being executed and the target temperature corresponding to the test print process or the interrupt job.

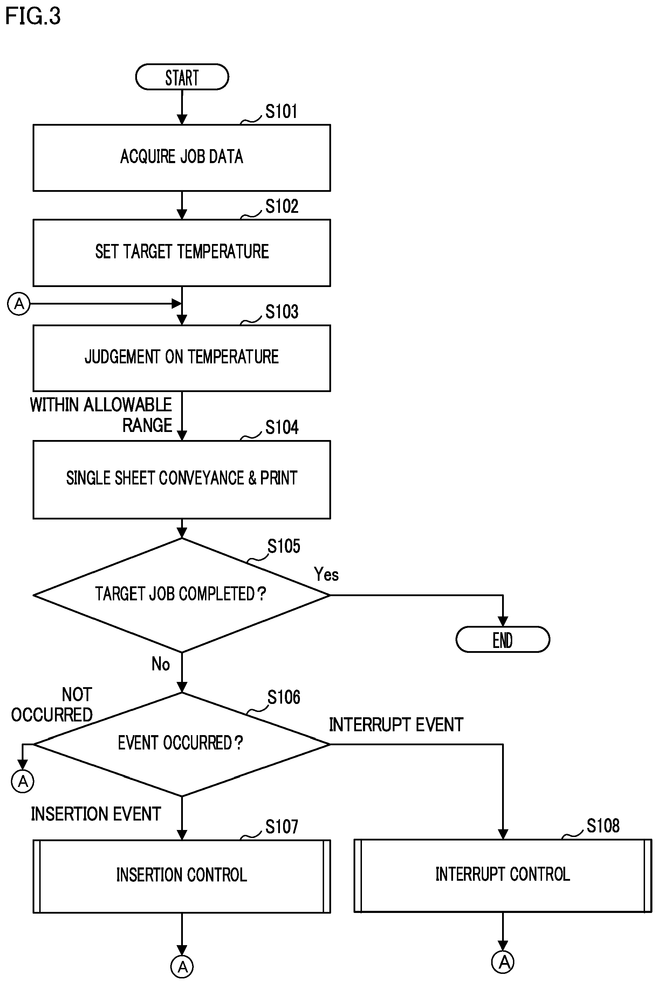

In the image forming apparatus 10, the print control portion 8b executes image formation control to be described later (see FIG. 3). The image formation control includes a process of shortening the waiting time in a case where the event serving as the starting point for the test print process or the interrupt job occurs while the job is being executed.

### [Image Formation Control]

An example of the procedure of the image formation control will be described below with reference to the flowchart shown in FIG. 3.

The main control portion 8a causes the print control portion 8b to execute the image formation control when a request for the job is input while the printing device 4 is not operating. The main control portion 8a inputs the request for the job through the communication device 83 or the operation device 801. In the following description, the job for which the image forming control is started will be referred to as a target job.

The image formation control is an example of the processing for realizing the image formation control method for controlling the image forming apparatus 10. The control device 8, which includes the print control portion 8b, is an example of the device that realizes the image formation control method.

In the following description, S101, S102, ... represent identification codes of a plurality of steps in the image formation control. In the image formation control, the process of step S101 is executed first.

### <Step S101 >

In step S101, the print control portion 8b acquires job data representing the content of the request of the target job. The job data includes image data to be subjected to the print process and data on a print condition. The print condition includes information such as the type of the sheet 9 to be used in the print process, the number of copies to be printed, and a correction value of the image density.

For example, when the print control portion 8b receives a request for the job from the host device 7, the print control portion 8b acquires the job data from the host device 7 through the communication device 83.

Alternatively, the print control portion 8b acquires data on the print condition through the operation device 801, and acquires the image data designated by an operation on the operation device 801 from the secondary storage device 82.

The print control portion 8b executes the process of step S102 after executing the process of step S101.

### <Step S102>

In step S102, the print control portion 8b sets the target temperature of the drying device 5 corresponding to the target job.

For example, the print control portion 8b sets the target temperature in accordance with the type of the sheet 9 designated in the print condition. Alternatively, the print control portion 8b may set the target temperature in accordance with the type of the sheet 9 and the correction value of the image density designated in the print condition.

The heater control portion 8c adjusts the power supplied to the heater 51 by feedback control based on the target temperature set in step S102 and the temperature detected by the temperature sensor 53.

The print control portion 8b executes the process of step S103 after executing the process of step S102.

### <Step S103>

In step S103, the print control portion 8b judges whether or not the temperature detected by the temperature sensor 53 falls within an allowable range based on the target temperature.

The print control portion 8b waits until the temperature detected by the temperature sensor 53 falls within the allowable range, and executes the process of step S104 when the temperature detected by the temperature sensor 53 falls within the allowable range.

### <Step S104>

In step S104, the print control portion 8b causes the printing device 4 to execute a single-sheet conveyance process and the print process corresponding to the target job. The single-sheet conveyance process is a process of conveying one sheet 9 to the first belt conveyor device 32 and the second belt conveyor device 33.

By executing the process of step S104, the print process on one sheet 9 is executed. The print control portion 8b selects the target storage portion corresponding to the type of the sheet 9 designated in the print condition from the plurality of sheet storing portions 1. Information on the type of the sheet 9 stored in each of the plurality of sheet storing portions 1 is set in advance.

The print control portion 8b executes the process of step S105 after executing the process of step S104.

### <Step S105>

In step S105, the print control portion 8b selects the next process depending on whether or not the target job has been completed.

When the target job has been completed, the print control portion 8b terminates the image formation control. On the other hand, the print control portion 8b executes the process of step S106 when the target job has not been completed yet.

### <Step S106>

In step S106, the print control portion 8b selects the next process in accordance with whether or not an insertion event or an interrupt event has occurred.

The insertion event is an event that a predetermined insertion condition is satisfied. The insertion condition is a condition for the start of the test print process. The test print process is a process of forming a predetermined test image on one or more sheets 9.

A first example of the insertion condition is a condition that the print process on a predetermined reference number of sheets 9 has been executed. A second example of the insertion condition is a condition that ink for a predetermined reference number of pixels has been ejected.

The interrupt event is an event that a request for an interrupt job, which is a new job, is input through the operation device 801 or the communication device 83.

When neither the insertion event nor the interrupt event occurs while the target job is being executed, the print control portion 8b repeats the processes of step S103 and subsequent steps.

On the other hand, when the insertion event occurs while the target job is being executed, the print control portion 8b executes the process of step S107.

In addition, when the interrupt event occurs while the target job is being executed, the print control portion 8b executes the process of step S108.

### <Step S107>

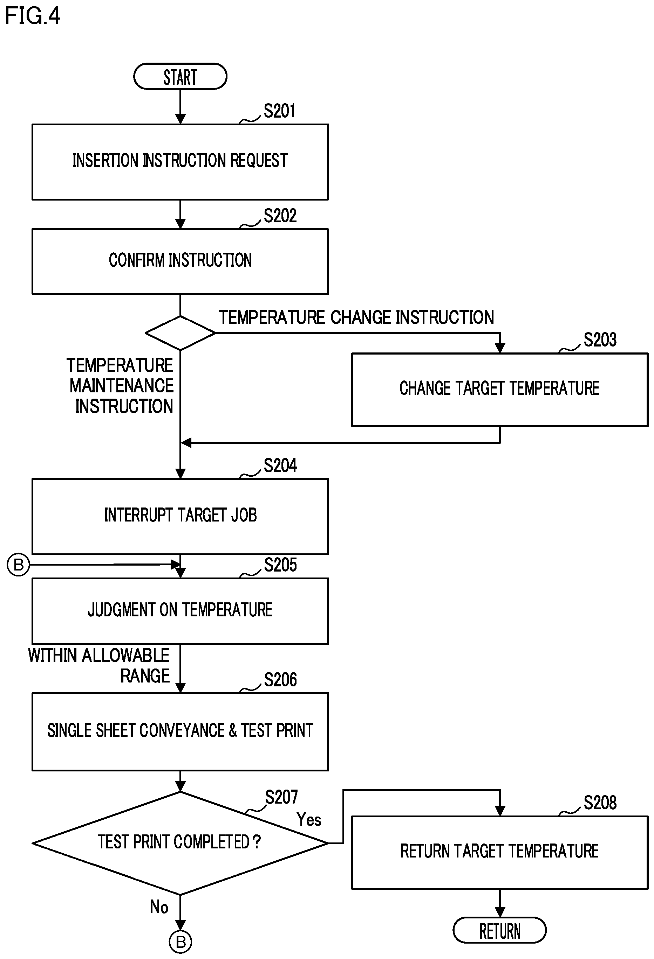

In step S107, the print control portion 8b executes insertion print control to be described later (see FIG. 4, FIG. 6, and FIG. 8). After executing the insertion print control, the print control portion 8b repeats the processes of step S103 and subsequent steps.

### <Step S108>

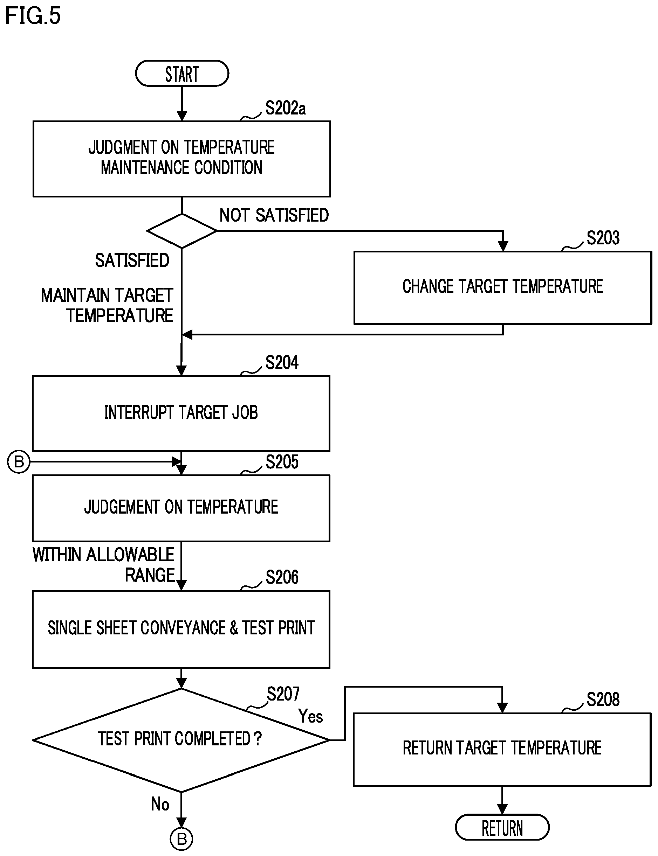

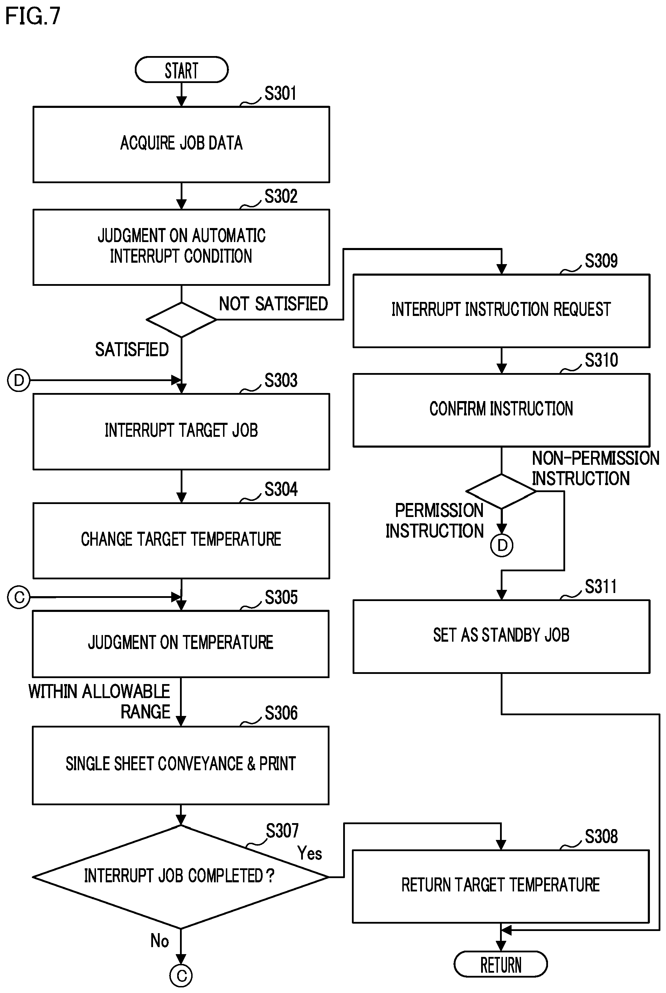

In step S108, the print control portion 8b executes interrupt job control to be described later (see FIG. 5 and FIG. 7). After executing the interrupt job control, the print control portion 8b repeats the processes of step S103 and subsequent steps.

### [First Example of Insertion Print Control]

The procedure of a first example of the insertion print control will be described below with reference to the flowchart shown in FIG. 4.

In the following description, S201, S202, ... represent identification codes of a plurality of steps in the first example of the insertion print control. In the first example of the insertion print control, the process of step S201 is executed first.

### <Step S201>

In step S201, the print control portion 8b executes an insertion instruction request process. The insertion instruction request process is a process of outputting, through the display device 802 or the communication device 83, insertion instruction request information for prompting input of an instruction.

The insertion instruction request information is information for prompting selection of one of a temperature change instruction and a temperature maintenance instruction. The temperature change instruction is an instruction to change the target temperature to a temperature corresponding to the test print process. The temperature maintenance instruction is an instruction to maintain the target temperature at a temperature corresponding to the target job.

The display device 802 and the communication device 83 are examples of the information output device.

The print control portion 8b executes the process of step S202 after executing the process of step S201.

### <Step S202>

In step S202, the print control portion 8b confirms the input of an instruction as a response to the output of the insertion instruction request information, and selects the next process in accordance with the content of the input instruction.

The print control portion 8b executes the process of step S203 without changing the target temperature when the temperature change instruction is input. On the other hand, the print control portion 8b skips step S203 and executes the process of step S204 when the temperature maintenance instruction is input.

### <Step S203>

In step S203, the print control portion 8b changes the target temperature to the temperature corresponding to the test print process.

When the process of step S203 is executed, the heater control portion 8c adjusts the power supplied to the heater 51 by feedback control based on the target temperature set in step S203 and the temperature detected by the temperature sensor 53.

The print control portion 8b executes the process of step S204 after executing the process of step S203.

### <Step S204>

In step S204, the print control portion 8b interrupts the target job. The print control portion 8b executes the process of step S205 after executing the process of step S204.

### <Step S205>

In step S205, the print control portion 8b waits until the temperature detected by the temperature sensor 53 falls within the allowable range, and executes the process of step S206 when the temperature detected by the temperature sensor 53 falls within the allowable range. The process of step S205 is the same as the process of step S103.

### <Step S206>

In step S206, the print control portion 8b causes the printing device 4 to execute the single-sheet conveyance process and the test print process.

By executing the process of step S206, the test print process on one sheet 9 is executed.

The print control portion 8b executes the process of step S207 after executing the process of step S206.

### <Step S207>

In step S207, the print control portion 8b selects the next process depending on whether or not the test print process has been completed.

In the present embodiment, the image forming apparatus 10 includes an image reading device 6 that reads an image formed on the sheet 9 (see FIG. 1). Further, the plurality of processing modules include an image processing portion 8d that processes data of a read image obtained by the image reading device 6 (see FIG. 2).

The image reading device 6 reads the test image formed on the sheet 9 by the test print process. The image processing portion 8d judges whether or not the quality of the test image formed on the sheet 9 satisfies a target quality, based on the data of the read image.

When it is judged that the quality of the test image does not satisfy the target quality, the print control portion 8b changes the control parameter of the printing device 4 and repeats the processes of step S205 and subsequent steps. Thus, the test print process is executed again under the condition that the temperature detected by the temperature sensor 53 falls within the allowable range.

On the other hand, when it is judged that the quality of the test image satisfies the target quality, the test print process is completed. The print control portion 8b executes the process of step S208 when the test print process has been completed.

Note that the quality of the test image may be judged visually by the user.

### <Step S208>

In step S208, the print control portion 8b returns the target temperature to the target temperature corresponding to the interrupted target job, and ends the insertion print control.

It is noted that, when the process of step S203 has not been executed, the print control portion 8b skips the process of step S208 and ends the insertion print control.

After the insertion print control ends, the print control portion 8b causes the printing device 4 to execute the remaining processes of the target job in step S103 and subsequent steps (see FIG. 3).

As described above, the print control portion 8b executes the processes of steps S101 to S105 when a request for the job is input while the printing device 4 is not operating. In steps S102 to S105, the print control portion 8b sets the target temperature corresponding to the job and causes the printing device 4 to execute the job.

Further, when the insertion event occurs while the printing device 4 is executing the job, the print control portion 8b executes the processes of steps S204 to S208 and the processes of steps S103 to S105 after the end of the insertion print control.

When the processes of steps S204 to S207 are executed following the process of step S202, the print control portion 8b causes the printing device 4 to interrupt the target job, which is the job being executed, and executes the processes of steps S205 to S207 without changing the target temperature.

In steps S205 to S207, the print control portion 8b causes the printing device 4 to execute the test print process. Thereafter, in steps S103 to S105, the print control portion 8b causes the printing device 4 to execute the remaining processes of the target job.

The processes of steps S204 to S207 executed subsequent to the process of step S202 and the processes of steps S103 to S105 after the end of the insertion print control are examples of the first insertion control.

In the first example of the insertion print control, when the temperature maintenance instruction is input as a response to the output of the insertion instruction request information, the print control portion 8b executes the first insertion control. The temperature maintenance instruction is an example of the first insertion instruction.

In the first example of the insertion print control, when the temperature change instruction is input as a response to the output of the insertion instruction request information, the print control portion 8b executes the processes of steps S203 and S204 to S208, and the processes of steps S103 to S105 after the end of the insertion print control.

In step S203 and steps S204 to S207, the print control portion 8b causes the printing device 4 to interrupt the target job, changes the target temperature to the temperature corresponding to the test print process, and causes the printing device 4 to execute the test print process.

Further, in step S208 and steps S103 to S105 after the end of the insertion print control, the print control portion 8b returns the target temperature to the temperature corresponding to the target job and causes the printing device 4 to execute the remaining processes of the target job.

The processes of steps S203 to S207 and the processes of steps S103 to S105 after the end of the insertion print control are examples of the second insertion control.

In the first example of the insertion print control, when the temperature change instruction is input as a response to the output of the insertion instruction request information, the print control portion 8b executes the second insertion control. The temperature change instruction is an example of the second insertion instruction.

By employing the first example of the insertion print control, the change of the target temperature is omitted in accordance with the response to the output of the insertion instruction request information (see steps S202 and S204).

That is, when the temperature maintenance instruction is input, priority is given to the prompt execution of the test print process over the drying performance of the ink of the test image. This contributes to shortening of the waiting time when the insertion event occurs.

### [Second Example of Insertion Print Control]

Next, the procedure of a second example of the insertion print control will be described below with reference to the flowchart shown in FIG. 5.

The second example of the insertion print control is executed in the procedure where step S201 and step S202 in the first example of the insertion print control are replaced with step S202a. Hereinafter, the differences in the second example of the insertion print control from the first example will be described.

In the second example of the insert print control, the process of step S202a is executed first.

### <Step S202a>

In step S202a, the print control portion 8b judges whether or not a predetermined temperature maintenance condition is satisfied, and selects the next process in accordance with the judgment result. The temperature maintenance condition is a condition for permitting execution of the test print process without changing the target temperature.

In the present embodiment, the temperature maintenance condition includes a first remaining number comparison condition or a first temperature comparison condition.

The first remaining number comparison condition is a condition where the number of unprocessed sheets of the target job is compared with a preset first reference remaining number. The number of unprocessed sheets is the number of sheets 9 that have not been subjected to the print process in the target job.

For example, the first remaining number comparison condition is a condition that the number of unprocessed sheets is less than the first reference remaining number. When the number of unprocessed sheets is small, there is a high possibility that the image quality confirmed in the previous test print process is maintained in the remaining processes of the target job.

The first temperature comparison condition is a condition where a target temperature difference, which is the difference between the target temperature corresponding to the target job and the target temperature corresponding to the test print process, is compared with a preset first temperature range.

For example, the first temperature comparison condition is a condition that the target temperature difference is within the first temperature range. When the target temperature difference is small, even if the test print process is executed without changing the target temperature, the effect on the drying performance of the ink on sheet 9 is small.

When the temperature maintenance condition is not satisfied, the print control portion 8b executes the process of step S203. Thus, the target temperature is changed to the temperature corresponding to the test print process in step S203, and then the processes of step S204 and subsequent processes are executed.

On the other hand, when the temperature maintenance condition is satisfied, the print control portion 8b executes the processes of step S204 and subsequent steps without changing the target temperature.

In the second example of the insertion print control, in a case where the temperature maintenance condition is satisfied when the insertion event occurs, the print control portion 8b executes the processes of steps S204 to S207 following the process of step S202a and the processes of steps S103 to S105 after the end of the insertion print control.

The processes of steps S204 to S207 executed subsequent to the process of step S202a and the processes of steps S103 to S105 after the end of the insertion print control are examples of the first insertion control.

In the second example of the insertion print control, in a case where the temperature maintenance condition is not satisfied when the insertion event occurs, the print control portion 8b executes the processes of steps S203 to S207 and the processes of steps S103 to S105 after the end of the insertion print control.

In the second example of the insertion print control, the processes of steps S203 to S207 and the processes of steps S103 to S105 after the end of the insertion print control are examples of the second insertion control.

By employing the second example of the insertion print control, the change of the target temperature is omitted when the temperature maintenance condition is satisfied (see steps S202a and S204).

That is, when the temperature maintenance condition is satisfied, priority is given to the prompt execution of the test print process over the drying performance of the ink of the test image. This contributes to shortening of the waiting time when the insertion event occurs.

### [Third Example of Insertion Print Control]

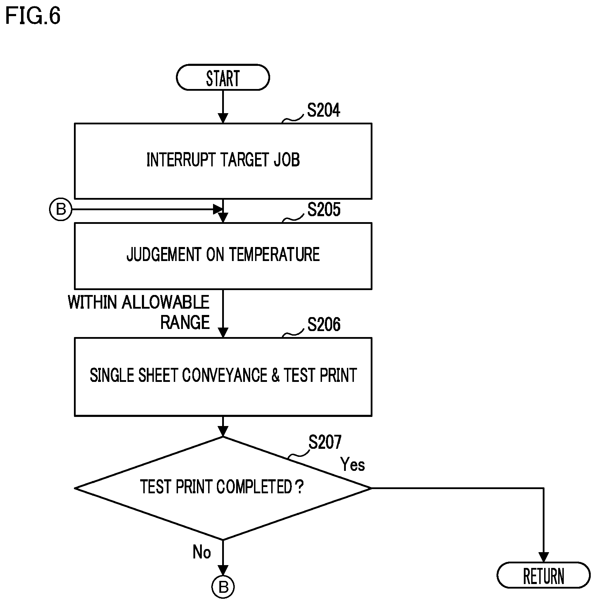

Next, the procedure of a third example of the interrupt job control will be described with reference to the flowchart shown in FIG. 6.

The third example of the interrupt job control is executed by the procedure where steps S201 to S203 and step S208 in the first example of the interrupt job control are omitted.

That is, in the third example of the interrupt job control, the print control portion 8b executes the processes of steps S204 to S207.

By employing the third example of the insertion print control, the change of the target temperature is omitted. That is, priority is given to the prompt execution of the test print process over the drying performance of the ink of the test image. This contributes to shortening of the waiting time when the insertion event occurs.

### [First Example of Interrupt Job Control]

Next, the procedure of a first example of the interrupt job control will be described with reference to the flowchart shown in FIG. 7.

In the following description, S301, S302, ... represent identification **codes of a** plurality of steps in the first example of the interrupt job control. In the first example of the interrupt job control, the process of step S301 is executed first.

### <Step S301>

In step S301, the print control portion 8b acquires job data representing the content of the request for the interrupt job as in step S101.

The print control portion 8b executes the process of step S302 after executing the process of step S301.

### <Step S302>

In step S302, the print control portion 8b judges whether or not a predetermined automatic interrupt condition is satisfied, and selects the next process in accordance with the judgment result. The automatic interrupt condition is a condition for permitting the automatic execution of the interrupt job involving the interruption of the target job.

In the present embodiment, the automatic interrupt condition includes a second remaining number comparison condition or a second temperature comparison condition.

The second remaining number comparison condition is a condition where the number of unprocessed sheets of the target job is compared with a preset second reference remaining number.

For example, the second remaining number comparison condition is a condition that the number of unprocessed sheets exceeds the second reference remaining number. When the number of unprocessed sheets is large, the waiting time until the interrupt job is executed is long.

When the number of unprocessed sheets exceeds the second reference remaining number, the automatic execution of the interrupt job is permitted in order to avoid a long waiting time.

The second temperature comparison condition is a condition where a target temperature difference, which is the difference between the target temperature corresponding to the target job and the target temperature corresponding to the interrupt job, is compared with a preset second temperature range.

For example, the second temperature comparison condition is a condition that the target temperature difference is within the second temperature range. When the target temperature difference is small, the waiting time until the interrupt job involving the interruption of the target job is executed is short.

When the automatic interrupt condition is not satisfied, the print control portion 8b executes the process of step S309. On the other hand, when the automatic interrupt condition is satisfied, the print control portion 8b executes the process of step S303.

### <Step S303>

In step S303, the print control portion 8b interrupts the target job. The print control portion 8b executes the process of step S304 after executing the process of step S303.

### <Step S304>

In step S304, the print control portion 8b changes the target temperature to the temperature corresponding to the interrupt job.

When the process of step S304 is executed, the heater control portion 8c adjusts the power supplied to the heater 51 by feedback control based on the target temperature set in step S304 and the temperature detected by the temperature sensor 53.

The print control portion 8b executes the process of step S305 after executing the process of step S304.

### <Step S305>

In step S305, the print control portion 8b waits until the temperature detected by the temperature sensor 53 falls within the allowable range, and executes the process of step S306 when the temperature detected by the temperature sensor 53 falls within the allowable range. The process of step S305 is the same as the process of step S103 and the process of step S205.

### <Step S306>

In step S306, the print control portion 8b causes the sheet conveying device 3 to execute the single-sheet conveyance process and causes the printing device 4 to execute the print process corresponding to the interrupt job.

Each time the process of step S306 is executed, the print process for each sheet 9 in the interrupt job is executed.

The print control portion 8b executes the process of step S307 after executing the process of step S306.

### <Step S307>

In step S307, the print control portion 8b selects the next process depending on whether or not the interrupt job has been completed.

When the interrupt job has not been completed, the print control portion 8b repeats the processes of step S305 and subsequent steps. On the other hand, when the interrupt job has been completed, the print control portion 8b executes the process of step S308.

### <Step S308>

In step S308, the print control portion 8b returns the target temperature to the target temperature corresponding to the interrupted target job, and ends the interrupt job control.

After the interrupt job control ends, the print control portion 8b causes the printing device 4 to execute the remaining processes of the target job in step S103 and subsequent steps (see FIG. 3).

### <Step S309>

In step S309, the print control portion 8b executes an interrupt instruction request process. The interrupt instruction request process is a process of outputting interrupt instruction request information for prompting input of an instruction through the display device 802 or the communication device 83.

The interrupt instruction request information is information for prompting the user to select one of a permission instruction and a non-permission instruction. The permission instruction is an instruction indicating that the execution of the interrupt job is permitted. The non-permission instruction is an instruction indicating that the execution of the interrupt job is not permitted.

The print control portion 8b executes the process of step S310 after executing the process of step S309.

### <Step S310>

In step S310, the print control portion 8b confirms the input of an instruction as a response to the output of the interrupt instruction request information, and selects the next process in accordance with the content of the input instruction.

The print control portion 8b executes the processes of step S303 and subsequent steps when the permission instruction has been input. Thus, the target job is interrupted and the interrupt job is executed.

On the other hand, the print control portion 8b executes the process of step S311 when the non-permission instruction has been input.

### <Step S311>

In step S311, the print control portion 8b sets the interrupt job as a standby job.

The standby job is a job to be executed after the target job is completed. For example, the print control portion 8b stores the job data corresponding to the interrupt job in a secondary storage device 82 as standby job data.

After the target job is completed, the print control portion 8b causes the printing device 4 to execute the job based on the standby job data.

That is, the print control portion 8b changes the target temperature to the temperature corresponding to the interrupt job after the target job is completed, and causes the printing device 4 to execute the interrupt job (see steps S102 to S105).

After executing the process of step S311, the print control portion 8b terminates the interrupt job control.

As described above, when an interrupt event occurs while the target job is being executed, the print control portion 8b executes the processes of steps S303 to S308 and the processes of steps S103 to S105 after the end of the interrupt job control.

In steps S303 to S307, the print control portion 8b causes the printing device 4 to interrupt the target job, changes the target temperature to the temperature corresponding to the interrupt job, and causes the printing device 4 to execute the interrupt job.

Further, in step S308 and steps S103 to S105, the print control portion 8b returns the target temperature to the temperature corresponding to the target job and causes the printing device 4 to execute the remaining processes of the target job.

The processes of steps S303 to S308 and the processes of steps S103 to S105 after the end of the interrupt job control are examples of the interrupt control.

In the first example of the interrupt job control, in a case where the automatic interrupt condition is satisfied when an interrupt event occurs, the print control portion 8b executes the interrupt control (see steps S302 and S303 to S308).

In the first example of the interrupt job control, in a case where the automatic interrupt condition is not satisfied when an interrupt event occurs, the print control portion 8b outputs the interrupt instruction request information through the display device 802 or the communication device 83 (see steps S302 and S309).

When the permission instruction is input as a response to the output of the interrupt instruction request information, the print control portion 8b executes the interrupt control (see steps S310 and S303 to S308).

On the other hand, when the non-permission instruction is input as a response to the output of the interrupt instruction request information, the print control portion 8b sets the interrupt job as the standby job (see step S311).

When the interrupt job is set as the standby job, the print control portion 8b changes the target temperature to the temperature corresponding to the interrupt job after the target job is completed, and causes the printing device 4 to execute the interrupt job (see steps S102 to S105).

By employing the first example of the interrupt job control, the interrupt job is postponed in accordance with whether the automatic interrupt condition is satisfied and the response to the output of the interrupt instruction request information (see steps S302 and S309 to S311). By postponing the interrupt job, the occurrence of the waiting time while the target job is being executed is avoided.

### [Second Example of Interrupt Job Control]

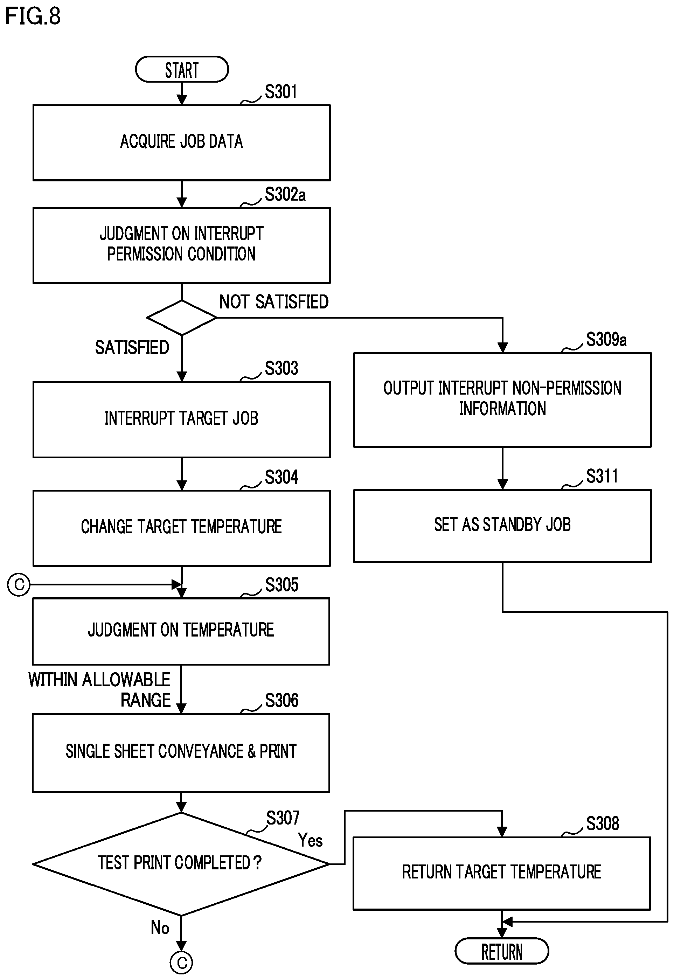

Next, the procedure of a second example of the interrupt job control will be described with reference to the flowchart shown in FIG. 8.

The second example of the interrupt job control is executed by the procedure where step S302, step S309, and step S310 in the first example of the interrupt job control are replaced with step S302a and step S309a. Hereinafter, the differences in the second example of the interrupt job control from the first example will be described.

In the second example of the interrupt job control, the process of step S301 is executed first. The print control portion 8b executes the process of step S302a after executing the process of step S301.

### <Step S302a>

In step S302a, the print control portion 8b judges whether or not a predetermined interrupt permission condition is satisfied, and selects the next process in accordance with the judgment result. The interrupt permission condition is a condition for permitting the automatic execution of the interrupt job involving the interruption of the target job.

In the present embodiment, the interrupt permission condition includes a third remaining number comparison condition or a third temperature comparison condition.

The third remaining number comparison condition is a condition where the number of unprocessed sheets of the target job is compared with a preset third reference remaining number.

For example, the third remaining number comparison condition is a condition that the number of unprocessed sheets exceeds the third reference remaining number. When the number of unprocessed sheets is large, the waiting time until the interrupt job is executed is long.

When the number of unprocessed sheets exceeds the third reference remaining number, the execution of the interrupt job is permitted in order to avoid the occurrence of a long waiting time.

The third temperature comparison condition is a condition where a target temperature difference, which is the difference between the target temperature corresponding to the target job and the target temperature corresponding to the interrupt job, is compared with a preset third temperature range.

For example, the third temperature comparison condition is a condition that the target temperature difference is within the third temperature range. When the target temperature difference is small, the waiting time until the interrupt job involving the interruption of the target job is executed is short.

When the interrupt permission condition is not satisfied, the print control portion 8b executes the process of step S309a. On the other hand, when the interrupt permission condition is satisfied, the print control portion 8b executes the processes of steps S303 to S308. The processes of steps S303 to S308 are the same in the first example and the second example of the interrupt job control.

### <Step S309a>

In step S309a, the print control portion 8b outputs the interrupt non-permission information through the display device 802 or the communication device 83.

The interrupt non-permission information is predetermined information indicating that the execution of the interrupt job involving the interruption of the target job is not permitted.

The print control portion 8b executes the process of step S311 after executing the process of step S309a. In the first and second examples of the interrupt job control, the process of step S311 is the same.

In the second example of the interrupt job control, the print control portion 8b executes the interrupt control in a case where the interrupt permission condition is satisfied when the interrupt event occurs (see step S302).

In the second example of the interrupt job control, in a case where the interrupt permission condition is not satisfied when the interrupt event occurs, the print control portion 8b sets the interrupt job as the standby job (see step S311).

When the interrupt job is set as the standby job, the print control portion 8b changes the target temperature to the temperature corresponding to the interrupt job after the target job is completed, and causes the printing device 4 to execute the interrupt job (see steps S102 to S105).

In the second example of the interrupt job control, in a case where the interrupt permission condition is not satisfied when the interrupt event occurs, the print control portion 8b outputs the interrupt non-permission information through the display device 802 or the communication device 83 (see step S309a).

By employing the second example of the interrupt job control, the interrupt job is postponed in accordance with whether the interrupt permission condition is satisfied (see steps S302a and S311). By postponing the interrupt job, the occurrence of the waiting time while the target job is being executed is avoided.

It is to be understood that the embodiments herein are illustrative and not restrictive, since the scope of the disclosure is defined by the appended claims.

## Claims

1. An image formation control method for controlling an image forming apparatus (10) including: a printing device (4) configured to form an image on a sheet by ejecting ink; and a drying device (5) including a temperature detection device (53) and a heater (51) whose power supply is adjusted by feedback control based on a target temperature set for each job for sequentially forming images on a plurality of sheets and a temperature detected by the temperature detection device and configured to dry the ink on the sheet by the heater (51), the image formation control method comprising:
by a control device (8), setting the target temperature corresponding to the job and causing the printing device (4) to execute the job when a request for the job is input while the printing device (4) is not operating;
by the control device (8), executing first insertion control of, when an insertion event occurs in which a predetermined insertion condition is satisfied while the printing device (4) is executing the job, causing the printing device (4) to interrupt a target job which is the job being executed, causing the printing device (4) to execute a test print process of forming a predetermined image on one or more of the sheets without changing the target temperature, and then causing the printing device (4) to execute a remaining process of the target job; and
by the control device (8), executing interrupt control of, when an interrupt event occurs in which a request for an interrupt job which is a new job is input while the target job is being executed, causing the printing device (4) to interrupt the target job, changing the target temperature to a temperature corresponding to the interrupt job, and causing the printing device (4) to execute the interrupt job, and then returning the target temperature to the temperature corresponding to the target job, and causing the printing device (4) to execute the remaining process of the target job.

2. The image formation control method according to claim 1, further comprising:
by the control device (8), outputting insertion instruction request information for prompting input of an instruction through an information output device (802) when the insertion event occurs;
by the control device (8), executing the first insertion control when a first insertion instruction is input as a response to the output of the insertion instruction request information; and
by the control device (8), executing second insertion control of, when a second insertion instruction is input as a response to the output of the instruction request information, causing the printing device (4) to interrupt the target job, changing the target temperature to a temperature corresponding to the test print process, and causing the printing device (4) to execute the test print process, and then returning the target temperature to the temperature corresponding to the target job and causing the printing device (4) to execute the remaining process of the target job.

3. The image formation control method according to claim 1, further comprising:
in a case where a predetermined temperature maintenance condition is satisfied when the insertion event occurs, executing the first insertion control by the control device (8); and
in a case where the temperature maintenance condition is not satisfied when the insertion event occurs, executing, by the control device (8), second insertion control of causing the printing device (4) to interrupt the target job, changing the target temperature to a temperature corresponding to the test print process, and causing the printing device (4) to execute the test print process, and then returning the target temperature to the temperature corresponding to the target job and causing the printing device (4) to execute the remaining process of the target job.

4. The image formation control method according to claim 3, wherein the temperature maintenance condition includes a first remaining number comparison condition where a number of unprocessed sheets of the target job is compared with a preset first reference remaining number, or a first temperature comparison condition where a difference between the target temperature corresponding to the target job and the target temperature corresponding to the test print process is compared with a preset first temperature range.

5. The image formation control method according to any one of claims 1 to 4, further comprising:
in a case where a predetermined automatic interrupt condition is satisfied when the interrupt event occurs, executing the interrupt control by the control device (8);
in a case where the automatic interrupt condition is not satisfied when the interrupt event occurs, outputting, by the control device (8), interrupt instruction request information for prompting input of an instruction through an information output device (802);
when a permission instruction is input as a response to the output of the interrupt instruction request information, executing the interrupt control by the control device (8); and
when a non-permission instruction is input as the response to the output of the interrupt instruction request information, by the control device (8), changing the target temperature to a temperature corresponding to the interrupt job after the target job is completed, and causing the printing device (4) to execute the interrupt job.

6. The image forming control method according to claim 5, wherein the automatic interrupt condition includes a second remaining number comparison condition where a number of unprocessed sheets of the target job is compared with a preset second reference remaining number, or a second temperature comparison condition where a difference between the target temperature corresponding to the target job and the target temperature corresponding to the interrupt job is compared with a preset second temperature range.

7. The image formation control method according to any one of claims 1 to 4, further comprising:
in a case where a predetermined interrupt permission condition is satisfied when the interrupt event occurs, executing the interrupt control by the control device (8); and
in a case where the interrupt permission condition is not satisfied when the interrupt event occurs, by the control device (8), changing the target temperature to a temperature corresponding to the interrupt job after the target job is completed and causing the printing device (4) to execute the interrupt job.

8. The image formation control method according to claim 7, wherein the interrupt permission condition includes a third remaining number comparison condition where a number of unprocessed sheets of the target job is compared with a preset third reference remaining number, or a third temperature comparison condition where a difference between the target temperature corresponding to the target job and the target temperature corresponding to the interrupt job is compared with a preset third temperature range.

9. The image forming control method according to claim 8, further comprising:
in a case where the interrupt permission condition is not satisfied when the interrupt event occurs, outputting, by the control device (8), interrupt non-permission information through an information output device (802).

10. An image forming apparatus (10) comprising:
a printing device (4) configured to form an image on a sheet by ejecting ink;
a drying device (5) including a heater (51) and a temperature detection device (53) configured to detect a temperature of the heater (51) or a temperature of air heated by the heater (51), and configured to dry the ink on the sheet by the heater (51) supplied with power corresponding to a comparison between a temperature detected by the temperature detection device (53) and a target temperature set for each job; and
a control device (8) configured to realize the image forming control method according to any one of claims 1 to 4.

## Patentansprüche

1. Bilderzeugungssteuerungsverfahren zum Steuern einer Bilderzeugungseinrichtung (10), einschließend: eine Druckvorrichtung (4), die ausgebildet ist, um ein Bild auf einem Blatt durch Ausstoßen von Tinte zu erzeugen; und eine Trocknungsvorrichtung (5), die eine Temperaturdetektionsvorrichtung (53) und eine Heizung (51) umfasst, deren Leistungsversorgung durch eine Rückkopplungssteuerung basierend auf einer Zieltemperatur, die für jeden Auftrag zum sequentiellen Erzeugen von Bildern auf einer Vielzahl von Blättern eingestellt wird, und einer Temperatur, die durch die Temperaturdetektionsvorrichtung detektiert wird, angepasst wird, und ausgebildet ist, um die Tinte auf dem Blatt durch die Heizung (51) zu trocknen, wobei das Bilderzeugungssteuerungsverfahren Folgendes umfasst:
durch eine Steuerungsvorrichtung (8), Einstellen der Zieltemperatur, die dem Auftrag entspricht, und Veranlassen der Druckvorrichtung (4), den Auftrag auszuführen, wenn eine Anforderung für den Auftrag eingegeben wird, während die Druckvorrichtung (4) nicht in Betrieb ist;
durch die Steuerungsvorrichtung (8), Ausführen einer ersten Einführungssteuerung, wenn ein Einführungsereignis auftritt, bei dem eine vorbestimmte Einführungsbedingung erfüllt ist, während die Druckvorrichtung (4) den Auftrag ausführt, des Veranlassens der Druckvorrichtung (4), einen Zielauftrag zu unterbrechen, der Auftrag ist, der ausgeführt wird, des Veranlassens, der Druckvorrichtung (4), einen Testdruckprozess des Erzeugens eines vorbestimmten Bildes auf einem oder mehreren der Blätter auszuführen, ohne die Zieltemperatur zu ändern, und dann des Veranlassens der Druckvorrichtung (4), einen verbleibenden Prozess des Zielauftrags auszuführen; und
durch die Steuerungsvorrichtung (8), Ausführen einer Unterbrechungssteuerung, wenn ein Unterbrechungsereignis auftritt, bei dem eine Anforderung für einen Unterbrechungsauftrag, der ein neuer Auftrag ist, eingegeben wird, während der Zielauftrag ausgeführt wird, des Veranlassens der Druckvorrichtung (4), den Zielauftrag zu unterbrechen, des Änderns der Zieltemperatur auf eine Temperatur, die dem Unterbrechungsauftrag entspricht, und des Veranlassens der Druckvorrichtung (4), den Unterbrechungsauftrag auszuführen, und dann des Zurückkehrens der Zieltemperatur auf die Temperatur, die dem Zielauftrag entspricht, und des Veranlassens der Druckvorrichtung (4), den verbleibenden Prozess des Zielauftrags auszuführen.

2. Bilderzeugungssteuerungsverfahren nach Anspruch 1, weiter umfassend:
durch die Steuerungsvorrichtung (8), Ausgeben von Einführungsanweisungsanforderungsinformationen, zum Prompten der Eingabe einer Anweisung durch eine Informationsausgabevorrichtung (802), wenn das Einführungsereignis auftritt;
durch die Steuerungsvorrichtung (8), Ausführen der ersten Einführungssteuerung, wenn eine erste Einführungsanweisung als eine Antwort auf die Ausgabe der Einführungsanweisungsanforderungsinformationen eingegeben wird; und
durch die Steuerungsvorrichtung (8), Ausführen der zweiten Einführungssteuerung, wenn eine zweite Einführungsanweisung als eine Antwort auf die Ausgabe der Anweisungsanforderungsinformation eingegeben wird, des Veranlassens der Druckvorrichtung (4), den Zielauftrag zu unterbrechen, des Änderns der Zieltemperatur auf eine Temperatur, die dem Testdruckprozess entspricht, und des Veranlassens der Druckvorrichtung (4), den Testdruckprozess auszuführen, und dann des Zurückführens der Zieltemperatur auf die Temperatur, die dem Zielauftrag entspricht, und des Veranlassens der Druckvorrichtung (4), den verbleibenden Prozess des Zielauftrags auszuführen.

3. Bilderzeugungssteuerungsverfahren nach Anspruch 1, weiter umfassend:
in einem Fall, wenn eine vorbestimmte Temperaturaufrechterhaltungsbedingung erfüllt ist, wenn das Einführungsereignis auftritt, Ausführen der ersten Einführungssteuerung durch die Steuerungsvorrichtung (8); und
in einem Fall, wenn die Temperaturaufrechterhaltungsbedingung nicht erfüllt ist, wenn das Einführungsereignis auftritt, Ausführen, durch die Steuerungsvorrichtung (8), der zweiten Einführungssteuerung des Veranlassens der Druckvorrichtung (4), den Zielauftrag zu unterbrechen, des Änderns der Zieltemperatur auf eine Temperatur, die dem Testdruckprozess entspricht, und des Veranlassens der Druckvorrichtung (4), den Testdruckprozess auszuführen, und dann des Zurückführens der Zieltemperatur auf die Temperatur, die dem Zielauftrag entspricht, und des Veranlassens der Druckvorrichtung (4), den verbleibenden Prozess des Zielauftrags auszuführen.

4. Bilderzeugungssteuerungsverfahren nach Anspruch 3, wobei die Temperaturaufrechterhaltungsbedingung eine erste Restanzahlvergleichsbedingung einschließt, bei der eine Anzahl unverarbeiteter Blätter des Zielauftrags mit einer voreingestellten ersten Referenzrestanzahl verglichen wird, oder eine erste Temperaturvergleichsbedingung, bei der eine Differenz zwischen der dem Zielauftrag entsprechenden Zieltemperatur und der dem Testdruckprozess entsprechenden Zieltemperatur mit einem voreingestellten ersten Temperaturbereich verglichen wird.

5. Bilderzeugungssteuerungsverfahren nach einem der Ansprüche 1 bis 4, weiter umfassend:
in einem Fall, wenn eine vorbestimmte automatische Unterbrechungsbedingung erfüllt ist, wenn das Unterbrechungsereignis auftritt, Ausführen der Unterbrechungssteuerung durch die Steuerungsvorrichtung (8);
in einem Fall, in dem die automatische Unterbrechungsbedingung nicht erfüllt ist, wenn das Unterbrechungsereignis auftritt, Ausgeben, durch die Steuerungsvorrichtung (8), von Unterbrechungsanweisungsanforderungsinformationen zum Prompten einer Eingabe einer Anweisung durch eine Informationsausgabevorrichtung (802);
wenn eine Erlaubnisanweisung als eine Antwort auf die Ausgabe der Unterbrechungsanweisungsanforderungsinformationen eingegeben wird, Ausführen der Unterbrechungssteuerung durch die Steuerungsvorrichtung (8); und
wenn eine Nichterlaubnisanweisung als die Antwort auf die Ausgabe der Unterbrechungsanweisungsanforderungsinformation, durch die Steuerungsvorrichtung (8), eingegeben wird, Ändern der Zieltemperatur auf eine Temperatur, die dem Unterbrechungsauftrag entspricht, nachdem der Zielauftrag abgeschlossen ist, und Veranlassen der Druckvorrichtung (4), den Unterbrechungsauftrag auszuführen.

6. Bilderzeugungssteuerungsverfahren nach Anspruch 5, wobei die automatische Unterbrechungsbedingung eine zweite Restanzahlvergleichsbedingung einschließt, bei der eine Anzahl unverarbeiteter Blätter des Zielauftrags mit einer voreinstellten zweiten Referenzrestanzahl verglichen wird, oder eine zweite Temperaturvergleichsbedingung, bei der eine Differenz zwischen der dem Zielauftrag entsprechenden Zieltemperatur und der dem Unterbrechungsauftrag entsprechenden Zieltemperatur mit einem voreingestellten zweiten Temperaturbereich verglichen wird.

7. Bilderzeugungssteuerungsverfahren nach einem der Ansprüche 1 bis 4, weiter umfassend:
in einem Fall, wenn eine vorbestimmte Unterbrechungserlaubnisbedingung erfüllt ist, wenn das Unterbrechungsereignis auftritt, Ausführen der Unterbrechungssteuerung durch die Steuerungsvorrichtung (8); und
in einem Fall, in dem die Unterbrechungserlaubnisbedingung nicht erfüllt ist, wenn das Unterbrechungsereignis auftritt, durch die Steuerungsvorrichtung (8), Ändern der Zieltemperatur auf eine Temperatur, die dem Unterbrechungsauftrag entspricht, nachdem der Zielauftrag abgeschlossen ist, und Veranlassen der Druckvorrichtung (4), den Unterbrechungsauftrag auszuführen.

8. Bilderzeugungssteuerungsverfahren nach Anspruch 7, wobei die Unterbrechungserlaubnisbedingung eine dritte Restanzahlvergleichsbedingung einschließt, bei der eine Anzahl von noch nicht verarbeiteten Blättern des Zielauftrags mit einer voreingestellten dritten Referenzrestanzahl verglichen wird, oder eine dritte Temperaturvergleichsbedingung, bei der eine Differenz zwischen der dem Zielauftrag entsprechenden Zieltemperatur und der dem Unterbrechungsauftrag entsprechenden Zieltemperatur mit einem voreingestellten dritten Temperaturbereich verglichen wird.

9. Bilderzeugungssteuerungsverfahren nach Anspruch 8, weiter umfassend:
in einem Fall, in dem die Unterbrechungserlaubnisbedingung nicht erfüllt ist, wenn das Unterbrechungsereignis auftritt, Ausgeben, durch die Steuerungsvorrichtung (8), von Unterbrechungsnichterlaubnisinformationen über eine Informationsausgabevorrichtung (802).

10. Bilderzeugungsvorrichtung (10), umfassend:
eine Druckvorrichtung (4), die ausgebildet ist, um ein Bild auf einem Blatt durch Ausstoßen von Tinte zu erzeugen;
eine Trocknungsvorrichtung (5), die eine Heizung (51) und eine Temperaturdetektionsvorrichtung (53) einschließt, die ausgebildet ist, um eine Temperatur der Heizung (51) oder eine Temperatur von durch die Heizung (51) geheizter Luft zu detektieren, und die ausgebildet ist, um die Tinte auf das Blatt durch die Heizung (51) zu trocknen, die mit einer Leistung versorgt wird, die einem Vergleich zwischen einer durch die Temperaturdetektionsvorrichtung (53) detektierten Temperatur und einer für jeden Auftrag eingestellten Zieltemperatur entspricht; und
eine Steuerungsvorrichtung (8), die ausgebildet ist, um das Bilderzeugungssteuerungsverfahren nach einem der Ansprüche 1 bis 4 zu realisieren.

## Revendications

1. Procédé de commande de formation d'image destiné à commander un appareil de formation d'image (10) incluant : un dispositif d'impression (4) configuré pour former une image sur une feuille par injection d'encre ; et un dispositif de séchage (5) incluant un dispositif de détection de température (53) et un élément chauffant (51) dont l'alimentation en courant électrique est ajustée par une commande de rétroaction sur la base d'une température cible réglée pour chaque tâche afin de former séquentiellement des image sur une pluralité de feuilles et d'une température détectée par le dispositif de détection de température, et configuré pour sécher l'encre sur la feuille par l'élément chauffant (51), le procédé de commande de formation d'image comprenant :
par un dispositif de commande (8), le réglage de la température cible correspondant à la tâche et le fait d'amener le dispositif d'impression (4) à exécuter la tâche lorsqu'une demande pour la tâche est entrée pendant que le dispositif d'impression (4) n'est pas en fonctionnement ;
par le dispositif de commande (8), l'exécution d'une première commande d'insertion, lorsque se produit un événement d'insertion dans lequel une condition d'insertion préétablie est remplie pendant que le dispositif d'impression (4) exécute la tâche, amenant le dispositif d'impression (4) à interrompre une tâche cible qui est la tâche en cours d'exécution, amenant le dispositif d'impression (4) à exécuter un processus d'impression test consistant à former une image préétablie sur une ou plusieurs des feuilles sans modifier la température cible, et ensuite le fait d'amener le dispositif d'impression (4) à exécuter un processus restant de la tâche cible ; et
par le dispositif de commande (8), l'exécution d'une commande d'interruption consistant, lorsque se produit un événement d'interruption dans lequel une demande pour une tâche d'interruption, qui est une nouvelle tâche, est entrée pendant que la tâche cible est en cours d'exécution, à amener le dispositif d'impression (4) à interrompre la tâche cible, à modifier la température cible en une température correspondant à la tâche d'interruption, et à amener le dispositif d'impression (4) à exécuter la tâche d'interruption, et ensuite le rétablissement de la température cible à la température correspondant à la tâche cible, et le fait d'amener le dispositif d'impression (4) à exécuter le processus restant de la tâche cible.

2. Procédé de commande de formation d'image selon la revendication 1, comprenant en outre :
par le dispositif de commande (8), la fourniture d'informations de demande d'instruction d'insertion pour solliciter l'entrée d'une instruction par l'intermédiaire d'un dispositif de sortie d'informations (802) lorsque l'événement d'insertion se produit ;
par le dispositif de commande (8),l'exécution de la première commande d'insertion lorsqu'une première instruction d'insertion est entrée en réponse à la sortie des informations de demande d'instruction d'insertion ; et
par le dispositif de commande (8), l'exécution d'une deuxième commande d'insertion consistant, lorsqu'une deuxième instruction d'insertion est entrée en réponse à la sortie des informations de demande d'instruction, à amener le dispositif d'impression (4) à interrompre la tâche cible, à modifier la température cible en une température correspondant au processus d'impression test, et à amener le dispositif d'impression (4) à exécuter le processus d'impression test, et ensuite le rétablissement de la température cible à la température correspondant à la tâche cible et le fait d'amener le dispositif d'impression (4) à exécuter le processus restant de la tâche cible.

3. Procédé de commande de formation d'image selon la revendication 1, comprenant en outre :
dans un cas où une condition de maintien de température préétablie est remplie lorsque l'événement d'insertion se produit, l'exécution de la première commande d'insertion par le dispositif de commande (8) ; et
dans un cas où la condition de maintien de température n'est pas remplie lorsque l'événement d'insertion se produit, l'exécution, par le dispositif de commande (8), d'une deuxième commande d'insertion consistant à amener le dispositif d'impression (4) à interrompre la tâche cible, à modifier la température cible en une température correspondant au processus d'impression test, et à amener le dispositif d'impression (4) à exécuter le processus d'impression test, et ensuite le rétablissement de la température cible à la température correspondant à la tâche cible et le fait d'amener le dispositif d'impression (4) à exécuter le processus restant de la tâche cible.

4. Procédé de commande de formation d'image selon la revendication 3, dans lequel la condition de maintien de la température inclut une première condition de comparaison de nombre restant, où un nombre de feuilles non traitées de la tâche cible est comparé à un premier nombre restant de référence préétabli, ou une première condition de comparaison de température, où une différence entre la température cible correspondant à la tâche cible et la température cible correspondant au processus d'impression test est comparée à une première plage de température préétablie.

5. Procédé de commande de formation d'image selon l'une quelconque des revendications 1 à 4, comprenant en outre :
dans un cas où une condition d'interruption automatique préétablie est remplie lorsque l'événement d'interruption se produit, l'exécution de la commande d'interruption par le dispositif de commande (8) ;
dans un cas où la condition d'interruption automatique n'est pas remplie lorsque l'événement d'interruption se produit, la fourniture, par le dispositif de commande (8), d'informations de demande d'instruction d'interruption pour solliciter l'entrée d'une instruction par l'intermédiaire d'un dispositif de sortie d'informations (802) ;
lorsqu'une instruction d'autorisation est entrée en réponse à la sortie des informations de demande d'instruction d'interruption, l'exécution de la commande d'interruption par le dispositif de commande (8) ; et
lorsqu'une instruction de non-autorisation est entrée en réponse à la sortie des informations de demande d'instruction d'interruption, la modification, par le dispositif de commande (8), de la température cible en une température correspondant à la tâche d'interruption après que la tâche cible est terminée, et le fait d'amener le dispositif d'impression (4) à exécuter la tâche d'interruption.

6. Procédé de commande de formation d'image selon la revendication 5, dans lequel la condition d'interruption automatique inclut une deuxième condition de comparaison de nombre restant, où un nombre de feuilles non traitées de la tâche cible est comparé à un deuxième nombre restant de référence préétabli, ou une deuxième condition de comparaison de température, où une différence entre la température cible correspondant à la tâche cible et la température cible correspondant à la tâche d'interruption est comparée à une deuxième plage de température préétablie.

7. Procédé de commande de formation d'image selon l'une quelconque des revendications 1 à 4, comprenant en outre :
dans un cas où une condition d'autorisation d'interruption préétablie est remplie lorsque l'événement d'interruption se produit, l'exécution de la commande d'interruption par le dispositif de commande (8) ; et
dans un cas où la condition d'autorisation d'interruption n'est pas remplie lorsque l'événement d'interruption se produit, la modification, par le dispositif de commande (8), de la température cible en une température correspondant à la tâche d'interruption après que la tâche cible est terminée, et le fait d'amener le dispositif d'impression (4) à exécuter la tâche d'interruption.

8. Procédé de commande de formation d'image selon la revendication 7, dans lequel la condition d'autorisation d'interruption inclut une troisième condition de comparaison de nombre restant, où un nombre de feuilles non traitées de la tâche cible est comparé à un troisième nombre restant de référence préétabli, ou une troisième condition de comparaison de température, où une différence entre la température cible correspondant à la tâche cible et la température cible correspondant à la tâche d'interruption est comparée à une troisième plage de température préétablie.

9. Procédé de commande de formation d'image selon la revendication 8, comprenant en outre :
dans un cas où la condition d'autorisation d'interruption n'est pas remplie lorsque l'événement d'interruption se produit, la fourniture, par le dispositif de commande (8), d'informations de non-autorisation d'interruption par l'intermédiaire d'un dispositif de sortie d'informations (802).

10. Appareil de formation d'image (10) comprenant :
un dispositif d'impression (4) configuré pour former une image sur une feuille par éjection d'encre ;
un dispositif de séchage (5) incluant un élément chauffant (51) et un dispositif de détection de température (53) configuré pour détecter une température de l'élément chauffant (51) ou une température d'air chauffé par l'élément chauffant (51), et configuré pour sécher l'encre sur la feuille par l'élément chauffant (51) alimenté en courant électrique en fonction d'une comparaison entre une température détectée par le dispositif de détection de température (53) et une température cible réglée pour chaque tâche ; et
un dispositif de commande (8) configuré pour mettre en œuvre le procédé de commande de formation d'image selon l'une quelconque des revendications 1 à 4.
